# FASCICULE DE BREVET EUROPEEN

(11) **EP 1 721 513 B1**
(45) Date de publication et mention de la délivrance du brevet: **03.09.2008**
(21) Numéro de dépôt: 06113180.1
(22) Date de dépôt: 27.04.2006
(51) Int. Cl.: A01D 75/30

(54) **Engin agricole comportant un véhicule moteur et plusieurs unités de travail destinées à couper des produits végétaux**
Landwirtschaftliches Gerät mit einem Triebfahrzeug und mehreren Mäheinheiten für pflanzliche Produkte
Agricultural machine comprising a motor vehicle and several working units intended to cut plant products

(30) Priorité: 10.05.2005 FR 0551207
(43) Date de publication de la demande: 15.11.2006
(73) Titulaire: KUHN S.A., 67700 Saverne (FR)
(72) Inventeur: WALTER, René, 57620, GOETZENBRUCK (FR); HALTER, Cédric, 67310, WASSELONNE (FR); POTIER, Philippe, 57370, VECKERSVILLER (FR)
(74) Mandataire: Andres, Jean-Claude

(56) Documents cités:
- EP-A- 1 093 707
- EP-A- 1 405 556
- FR-A- 2 837 347

## Description

La présente invention se rapporte à un engin agricole comportant un véhicule moteur et plusieurs unités de travail destinées à couper des produits végétaux sur pied, lesdites unités de travail étant liées audit véhicule moteur.

Il existe dans l'état de la technique un tel engin agricole comportant un véhicule moteur et au moins deux unités de travail frontales qui dépassent latéralement de manière à couvrir une large surface de coupe et améliorer la productivité de la machine (voir e.g. EP-A-1405556).

De telles faucheuses disposent d'une largeur de travail pouvant atteindre une dizaine de mètre, pour les déplacer sur les routes il a été nécessaire de prévoir une position de transport de largeur réduite dans laquelle les unités de travail sont pivotées à la verticale.

Dans cette configuration de transport il se pose un premier problème qui est celui de la visibilité de la route par le conducteur du véhicule, les unités de travail étant très gênantes dans cette configuration.

Un deuxième problème, lié au positionnement des unités de travail relevées et à l'avant du tracteur, est celui de la stabilité du véhicule notamment sur des terrains accidentés. L'instabilité du véhicule pouvant provoquer, dans certaines conditions défavorables, son renversement.

Afin de couvrir une surface aussi importante que possible dans le champ les unités de travail disposent de longueurs de plus en plus grandes. Le repliement desdites unités de travail autour du véhicule moteur, dans la position de transport, afin de respecter la dimension maximale autorisée pour les déplacements sur les voies publiques, conduit donc à un problème sérieux concernant la visibilité depuis la cabine du véhicule pour la conduite et à une instabilité dudit véhicule.

Dans les machines agricoles précédemment décrites et dans le cadre de la présente invention les unités de travail disposées à l'avant de l'engin moteur peuvent être sensiblement alignées et peuvent être des éléments de coupe des produits seuls, ou des éléments de coupe associés à un dispositif conditionneur de produits coupés, soit donc des machines classées dans les catégories des faucheuses ou des faucheuses conditionneuses. De telles machines peuvent en sus comporter des moyens pour le regroupement des produits coupés en andains en vue de faciliter leur reprise au moyen d'une ensileuse par exemple.

L'invention a pour objectif de résoudre les principales difficultés évoquées précédemment en proposant un engin agricole sur lequel la visibilité est bonne durant le travail et durant le transport et sur lequel, dans la position de transport le repliement des unités de travail n'entraîne pas d'instabilité du véhicule lors de la conduite sur les routes et chemins.

La présente invention concerne donc un engin agricole comportant un véhicule moteur portant des unités de travail destinées à couper des produits végétaux sur pied, au moins deux de ces unités de travail étant disposées lors du travail et vues suivant la direction d'avance au travail en avant dudit véhicule moteur, et dépassant latéralement ce dernier, ledit engin agricole est caractérisé par le fait qu'il comporte :
- un véhicule moteur pouvant se déplacer dans deux directions opposées, une direction d'avance pour le travail, et une direction de transport,
- une cabine de pilotage pouvant se déplacer le long du véhicule moteur,
- au moins un support central relié à un dispositif de relevage du véhicule moteur et supportant lesdites unités frontales, lesquelles unités de travail frontales qui dépassent latéralement le véhicule moteur étant déplaçables au moyen du support central dans une position de transport dans laquelle elles sont positionnées longitudinalement au moins en partie au-dessus du véhicule moteur.

La disposition des unités de travail et la configuration de repliement autour du véhicule moteur selon l'invention conduit à un engin agricole disposant d'un bon rendement avec une largeur de transport réduite. Le véhicule est compact et les masses sont relativement équilibrées, ce qui le rend stable lors des déplacements entre les zones de travail et sur les routes.

Dans la position de transport, la machine agricole selon l'invention est relativement compacte et sa hauteur peut être inférieure à quatre mètres, soit donc dans le gabarit routier autorisé.

Le mode de repliement permettant le passage de la position de travail à la position de transport, ainsi que le passage réciproque peuvent être optimisés avec l'emploi d'une structure minimale, de poids réduit et comprenant un nombre limité de vérins hydrauliques pour la manoeuvre, ce qui en fait une machine de faible coût compte tenu de ses performances.

L'utilisation d'une faucheuse avec de multiples unités de travail peut atteindre douze mètres avec trois unités de coupe, cette machine permet un débit de chantier élevé et donc de réduire sensiblement le nombre de jours de fauche. Pour les exploitants récoltant des surfaces importantes cette solution est très attractive.

D'autres caractéristiques et avantages de l'invention se dégageront de la description qui va suivre en regard des dessins annexés qui ne sont donnés qu'à titre d'exemples non limitatifs.
La figure 1 est une vue de dessus d'un engin agricole selon l'invention disposant de deux unités de travail frontales, lesquelles unités de travail étant en position de travail.
La figure 2 est une vue de côté de l'engin agricole représenté sur la figure 1.
La figure 3 illustre l'engin agricole représenté sur la figure 2 dans laquelle les unités de travail sont repliées en position de transport et dans laquelle la cabine de pilotage est déplacée et pivotée à 180°.
La figure 4 représente un engin agricole disposant de trois unités de travail frontales en position de travail.
La figure 5 illustre la position de transport de l'engin agricole représenté dans la figure 4 avec la cabine de pilotage déplacée et pivotée à 180° et les unités de travail repliées.

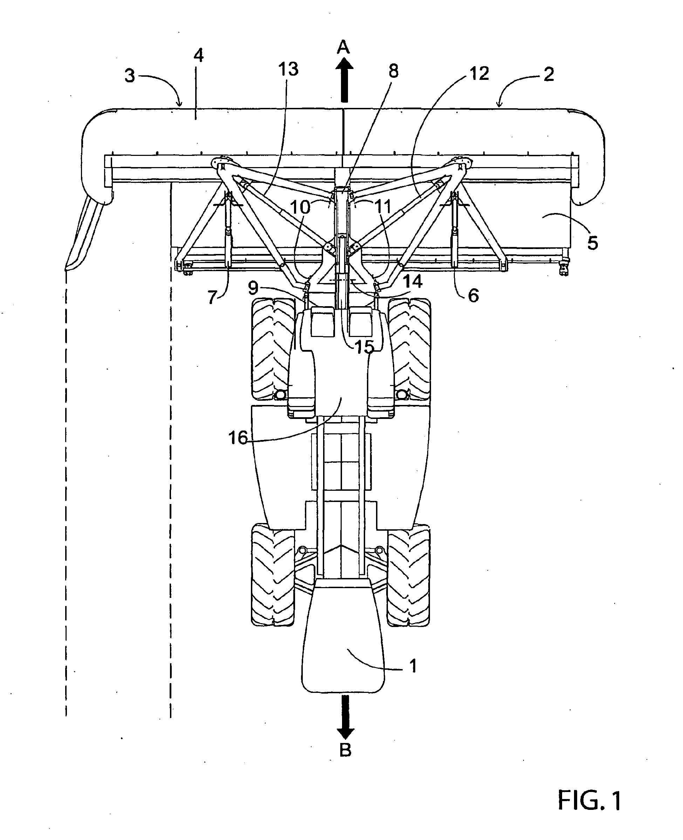

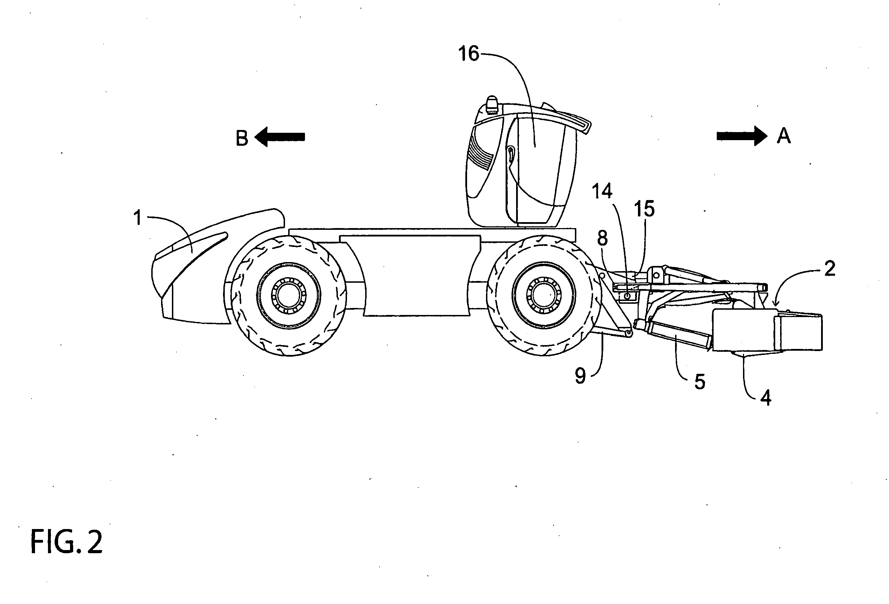

Selon un exemple avantageux de réalisation de l'invention illustré sur la figure 1, le véhicule moteur 1 dispose de deux unités de travail frontales 2, 3 sensiblement alignées et le dépassant latéralement. Dans la position de travail illustrée sur les figures 1 et 2 la direction d'avance A représentée par la flèche est celle du travail dans le champ.

Dans l'application des faucheuses conditionneuses dont il est préférentiellement question, les unités de travail frontales 2, 3 comportent au moins une barre de coupe 4, un dispositif de conditionnement des produits coupés et un dispositif 5 de regroupement en andains de ces produits coupés. Ce groupeur 5 de fourrage est situé à l'arrière de la barre de coupe 4.

Divers dispositifs connus de conditionnement des produits immédiatement après la coupe, permettant de briser la couche protectrice des végétaux coupés, afin d'accélérer le temps de séchage et raccourcir le délai avant collecte, sont incorporés ou incorporables dans les unités frontales, dans le cadre de l'invention.

Le groupeur de fourrage 5 qui peut être constitué par une bande transporteuse permet de rassembler les végétaux en un aller-retour, sur un andain qui est facile à reprendre avec une ensileuse par exemple. Le groupeur de fourrage 5 peut avantageusement être éloigné de la barre de coupe 4 pour le rendre inactif dans le cas où l'utilisateur voudrait laisser sécher les plants sur place pour en faire du foin.

Les moyens permettant d'éloigner et rapprocher le groupeur de fourrage 5 peuvent être par exemple des vérins hydrauliques 6, 7 placés sur la structure reliant les unités de travail frontales 2, 3 au véhicule moteur 1.

Selon l'invention, les deux unités de travail frontales 2, 3 alignées sont reliées et articulées avec le véhicule moteur 1 au moyen d'un support central 8 en une ou plusieurs parties et qui est porté par un dispositif de relevage 9 du véhicule moteur.

Les deux unités frontales 2, 3 sont articulées sur le support central 8 au moyen d'axes 10, 11 légèrement en biais, autour desquels ils peuvent être relevés jusque dans une position sensiblement verticale à l'aide de vérins hydrauliques 12, 13.

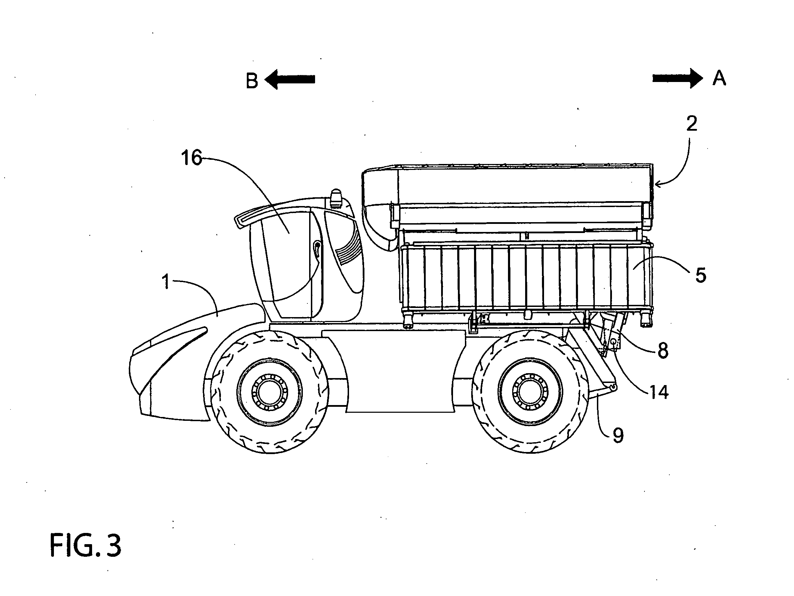

Le support central 8 comporte un axe d'articulation transversal 14 autour duquel peuvent être déplacées les deux unités frontales, au moyen d'un vérin hydraulique 15 pour atteindre la position de transport illustrée dans la figure 3 et également revenir de la position de transport à la position de travail.

Dans la position de travail de la figure 1, la cabine de pilotage 16 se situe au plus près des unités de travail frontales 2, 3. Elle est orientée dans la direction A et est avancée de manière à ce que le conducteur ait une bonne visibilité sur la zone de coupe dans le champ.

La figure 2 présente en vue de côté le véhicule moteur en position de travail et notamment le placement de la cabine de pilotage 16 au plus près des unités de travail 2, 3.

La figure 3 illustre la position de transport dans laquelle la cabine de pilotage 16 a été pivotée de 180° et déplacée sur le véhicule moteur 1 à l'opposé des unités de travail 2, 3. A cet effet, la cabine 16 peut être montée sur un pivot qui est lui-même déplaçable longitudinalement au moyen de vérins ou de câbles sur le véhicule 1. Lesdites unités de travail ont été placées longitudinalement au-dessus de la partie avant du véhicule moteur 1 sous l'action combinée des groupes de vérins 12, 13 et 15. Cette disposition de la cabine 16 et des unités de travail 2 et 3 permet d'obtenir une bonne répartition des masses sur le véhicule moteur, ce qui lui procure une bonne stabilité.

Pour placer les unités de travail frontales 2, 3 dans la position de transport, depuis la position de travail, il est d'abord effectué un pivotement de ces unités frontales autour des axes 10 et 11 dans une position sensiblement verticale, au moyen des vérins hydrauliques 12, 13 puis l'ensemble constitué est replié dans la direction de transport B, dans une position sensiblement horizontale, par un pivotement voisin de 90° autour de l'axe d'articulation transversal 14 au moyen du vérin hydraulique 15.

Les vérins hydrauliques 12, 13 sont placés de part et d'autre du support central 8 sur lequel ils sont attachés et sont fixés par leur extrémité opposée à l'unité de travail 2, 3 correspondante sensiblement en son milieu, tel que cela est représenté sur la figure 1.

Dans la position de transport illustrée sur la figure 3, la cabine de pilotage 16 a été pivotée de 180° autour d'un pivot vertical et reculée dans la direction B de manière à permettre le déplacement du véhicule moteur dans la direction de transport B. La direction de transport B est opposée à la direction d'avance A pour le travail de coupe des produits.

Le déplacement de la cabine de pilotage 16 dans la position de transport permet de dégager de la place sur le véhicule moteur pour le repliement des unités de travail frontales 2, 3 et de la structure supportant lesdites unités frontales au moins en partie au-dessus du véhicule moteur 1.

Le repliement des unités de travail frontales 2, 3 en position de transport a pour effet de les placer longitudinalement le long du véhicule moteur 1, dans une configuration dans laquelle la machine est très compacte, sa hauteur étant de préférence inférieure à 4 mètres et sa largeur étant réduite. En sus, les charges sont relativement bien réparties sur l'essieu avant et l'essieu arrière, favorisant ainsi la bonne stabilité de l'engin au transport.

L'ensemble des unités frontales 2, 3 après repliement n'augmente par ailleurs quasiment pas la largeur du véhicule moteur 1.

Selon l'invention, et tel que cela est illustré sur la figure 3, il apparaît clairement que dans la position de transport le conducteur du véhicule n'est en rien gêné par les unités frontales 2, 3 repliées, pour la conduite sur les routes.

L'engin agricole est adapté, notamment en terme de motorisation, et notamment en terme de moyens de conduite, pour permettre le déplacement dans les deux directions A et B.

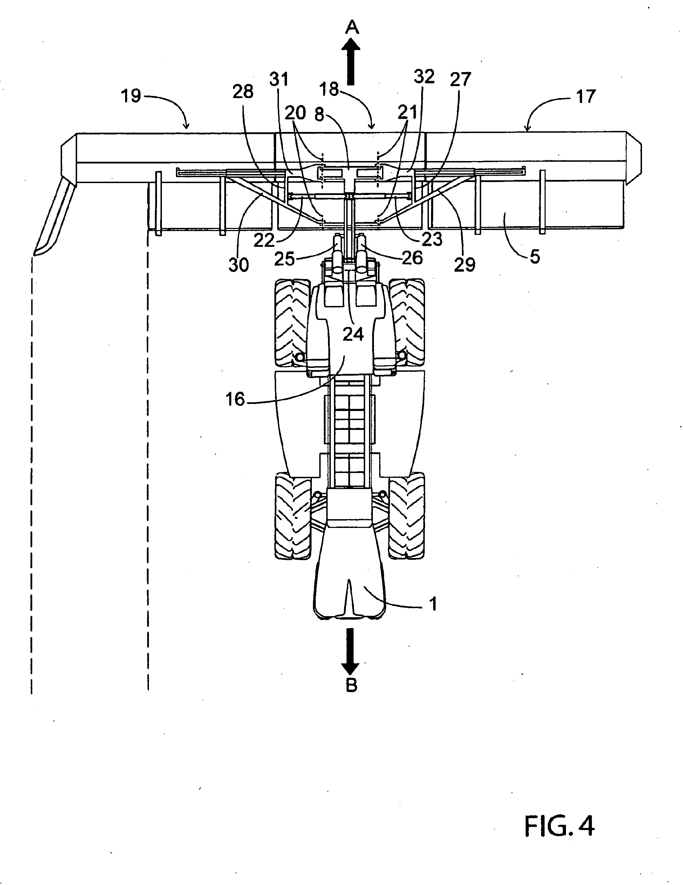

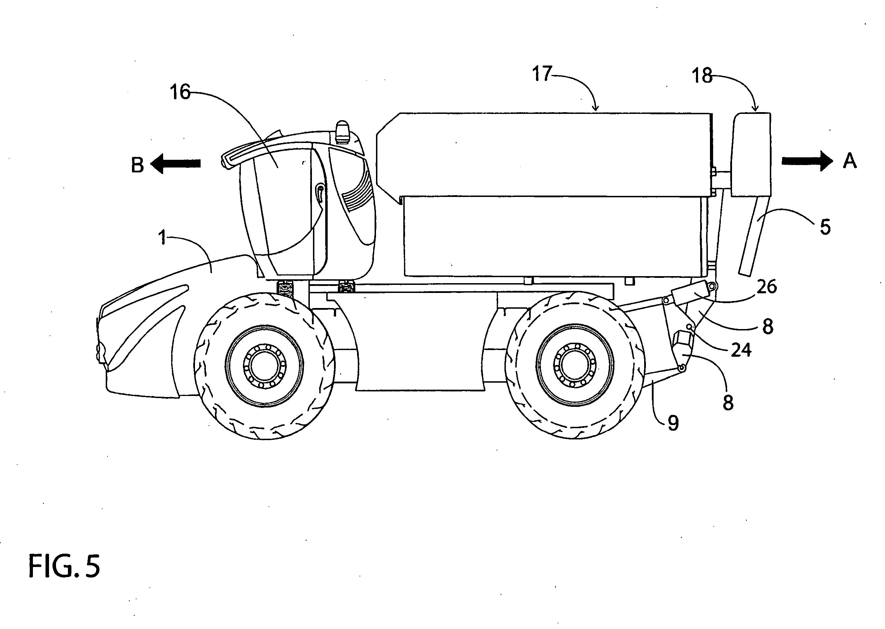

Selon un autre exemple de réalisation de l'engin agricole représenté sur les figures 4 et 5, le véhicule moteur comporte une cabine de pilotage déplaçable 16 et trois unités de travail frontales 17, 18, 19 sensiblement alignées pour la coupe des produits végétaux.

L'unité frontale 18, située au milieu, est reliée au support central 8 au moyen de bielles tandis que les deux unités frontales latérales 17, 19 sont articulées sur le support central 8 au moyen d'axes 20, 21 dirigés dans la direction d'avancement au travail A.

Les deux unités frontales latérales 17, 19 sont repliables autour des axes 20, 21 au moyen de vérins hydrauliques 22, 23 jusque dans une position sensiblement verticale. Chaque vérin hydraulique 22, 23 est fixé par une extrémité sur le support central 8 et par l'autre extrémité à des barres de liaison 27, 28 reliées aux unités de travail 17, 19.

Les barres de liaison 27, 28 sont fixées sur des traverses 29, 30 par une extrémité, et par l'autre extrémité à des poutres 31, 32 liées aux articulations 20 et 21.

L'ensemble, formé par les barres de liaison 27, 28, les traverses 29, 30 et les poutres 31, 32, forme une structure porteuse permettant le déplacement des unités frontales 17, 19 au moyen des vérins hydrauliques 22, 23.

Le support central 8 comporte un axe d'articulation transversal 24 (voir figure 5) et un ou deux vérins hydrauliques 25, 26, permettant le repliement des unités de travail 17, 18, 19 autour dudit axe 24 jusque dans la position de transport, après un pivotement de sensiblement 90° dans la direction de transport B.

Dans l'engin agricole représenté sur la figure 5 l'unité frontale centrale 18 est située, dans la position de transport, dans un plan sensiblement vertical et perpendiculairement aux deux unités frontales 17, 19 latérales repliées le long du véhicule moteur 1.

Ce déplacement de ladite unité frontale centrale 18 entre la position de travail et la position de transport s'effectue par une rotation d'un angle voisin de 90° autour de l'axe transversal 24.

Plusieurs variantes sont possibles quant aux moyens permettant le repliement des unités de travail frontales autour du véhicule moteur, notamment en ce qui concerne le nombre de vérins hydrauliques ainsi que leur positionnement, et pour le placement desdites unités de travail en position de transport, sans sortir du cadre de l'invention.

Il peut être envisagé un nombre plus ou moins grand d'unités frontales et lesdites unités peuvent être des faucheuses ou des faucheuses conditionneuses.

Dans la situation correspondant à plus de deux unités frontales il peut être imaginé différents modes de repliement pour disposer lesdites unités de travail sur le véhicule moteur, ces différents modes sont compris dans l'invention.

La cabine de pilotage pivotante peut être de différentes formes et dimensions, contenir l'ensemble des fonctionnalités usuelles associées aux unités de travail et à la conduite du véhicule moteur ou seulement une partie.

Il peut être prévu en variante une cabine de pilotage non pivotante, avec dans ce cas un deuxième volant et les commandes nécessaires en double, avec éventuellement un siège pivotant pour le conducteur ou un deuxième poste de pilotage pour la direction opposée. Les différentes combinaisons possibles en translation le long du véhicule moteur, avec ou sans rotation à 180° de la cabine de pilotage, sont prévues dans le cadre de l'invention.

## Revendications

1. Engin agricole comportant un véhicule moteur (1) auquel sont reliées plusieurs unités de travail (2, 3, 17, 18, 19) destinées à couper des produits sur pied, au moins deux de ces unités de travail (2, 3, 17, 19) étant disposées lors du travail et vues suivant une direction d'avance (A) en avant dudit véhicule moteur (1), et dépassant latéralement ce dernier, ledit engin agricole étant ***caractérisé par le fait* qu'**il comporte :
- un véhicule moteur (1) pouvant se déplacer dans deux directions opposées, une direction d'avance (A) pour le travail, et une direction de transport (B),
- une cabine de pilotage (16) pouvant se déplacer le long du véhicule moteur (1),
- au moins un support central (8) relié au dispositif de relevage (9) du véhicule moteur (1) et supportant lesdites unités de travail frontales (2, 3, 17, 18, 19), les unités de travail (2, 3, 17, 19) qui dépassent latéralement le véhicule moteur (1) étant déplaçables au moyen du support central (8) dans une position de transport dans laquelle elles sont positionnées longitudinalement au moins en partie au-dessus du véhicule moteur (1).

2. Engin agricole selon la revendication 1, ***caractérisé par le fait* que** les unités de travail (2, 3, 17, 19) qui dépassent latéralement le véhicule moteur (1) sont articulées sur le support central (8) au moyen d'axes (10, 11, 20, 21) sensiblement dirigés dans la direction d'avancement (A) et autour desquels elles peuvent être déplacées dans des positions sensiblement verticales, lequel support central (8) comporte un axe d'articulation (14, 24) transversal à la direction d'avancement (A) autour duquel il peut être déplacé avec lesdites unités de travail (2, 3, 17, 19) pour les positionner longitudinalement au moins en partie au-dessus du véhicule moteur (1).

3. Engin agricole selon la revendication 2, ***caractérisé par le fait* que** dans la position de transport, les unités de travail frontales (2, 3, 17, 19) placées longitudinalement au moins en partie au-dessus du véhicule moteur (1) se situent à l'arrière de la cabine de pilotage (16).

4. Engin agricole selon la revendication 3, ***caractérisé par le fait* que** la position de transport des unités de travail frontales (2, 3, 17, 19) est obtenue depuis la position de travail par un pivotement des unités frontales (2, 3, 17, 19) dans une position sensiblement verticale puis par une rotation voisine de 90° de l'ensemble formé dans la direction de transport (B), pour amener les unités frontales (2, 3, 17, 19) dans une position sensiblement horizontale.

5. Engin agricole selon la revendication 4, ***caractérisé par le fait* que** les unités de travail frontales (2, 3, 17, 19) sont pivotées dans une position sensiblement verticale au moyen de vérins hydrauliques (12, 13, 22, 23).

6. Engin agricole selon la revendication 5, ***caractérisé par le fait* que** chaque vérin hydraulique (12, 13, 22, 23) est fixé par une extrémité sur le support central (8) et par l'extrémité opposée à une unité frontale de travail (2, 3, 17, 19).

7. Engin agricole selon la revendication 2, ***caractérisé par le fait* que** les unités frontales (2, 3, 17, 19) relevées dans une position sensiblement verticale sont ensuite repliées dans une position sensiblement horizontale, dans la direction de transport (B), longitudinalement au-dessus du véhicule moteur (1), au moyen de vérins hydrauliques (15, 25, 26).

8. Engin agricole selon la revendication 1, ***caractérisé par le fait* qu'**il comporte trois unités de travail frontales (17, 18, 19) sensiblement alignées, et que les deux unités frontales (17, 19) latérales sont articulées sur le support central (8) au moyen d'axes (20, 21) dirigés dans la direction de travail (A).

9. Engin agricole selon la revendication 8, ***caractérisé par le fait* que** les unités de travail frontales (17, 19) latérales sont placées dans la position de transport par pivotement dans une position sensiblement verticale au moyen de vérins hydrauliques (22, 23), puis amenés au-dessus du véhicule moteur (1) par un pivotement voisin de 90° autour d'un axe transversal (24) au moyen d'au moins un vérin hydraulique (25, 26).

10. Engin agricole selon la revendication 8, ***caractérisé par le fait* que** l'unité de travail frontale centrale (18), dans la position de transport, est positionnée sensiblement à la verticale, perpendiculairement aux deux unités de travail frontales (17, 19) latérales, ce déplacement de ladite unité frontale (18) centrale entre la position de travail et la position de transport étant effectué par pivotement d'un angle voisin de 90° autour d'un axe transversal (24).

11. Engin agricole selon l'une quelconque des revendications précédentes, ***caractérisé par le fait* que** les unités de travail frontales (2, 3, 17, 18, 19) comportent au moins une barre de coupe, un dispositif de conditionnement des produits fauchés et un groupeur (5) des produits en andains.

## Claims

1. Agricultural machine comprising a motor vehicle (1) to which are connected several working units (2, 3, 17, 18, 19) intended to cut standing plant products, at least two of these working units (2, 3, 17, 18, 19) being arranged, during work and seen in a direction of travel (A), in front of the said motor vehicle (1) and protruding laterally from the latter, the said agricultural machine being ***characterized in* that** it comprises:
- a motor vehicle (1) that can move in two opposite directions, a direction of travel (A) for work, and a transport direction (B),
- a driver's cabin (16) that can move along the motor vehicle (1),
- at least one central support (8) connected to the lifting device (9) of the motor vehicle (1) and supporting the said front working units (2, 3, 17, 18, 19), the working units (2, 3, 17, 19) that protrude laterally from the motor vehicle (1) being able to be moved by means of the central support (8) into a transport position in which they are positioned longitudinally at least partly above the motor vehicle (1).

2. Agricultural machine according to claim 1, ***characterized in* that** the working units (2, 3, 17, 19) that protrude laterally from the motor vehicle (1) are articulated on the central support (8) by means of axes (10, 11, 20, 21) substantially directed in the direction of travel (A) and about which they may be moved into substantially vertical positions, which said central support (8) comprises an axis of articulation (14, 24) transverse to the direction of travel (A) about which it may be moved with the said working units (2, 3, 17, 19) in order to position them longitudinally at least in part above the motor vehicle (1).

3. Agricultural machine according to claim 2, ***characterized in* that,** in the transport position, the front working units (2, 3, 17, 19) placed longitudinally at least in part above the motor vehicle (1) are situated at the rear of the driver's cabin (16).

4. Agricultural machine according to claim 3, ***characterized in* that** the transport position of the front working units (2, 3, 17, 19) is obtained from the working position by a pivoting of the front units (2, 3, 17, 19) into a substantially vertical position and then by a rotation of about 90° of the assembly formed in the direction of transport (B) , to bring the front units (2, 3, 17, 19) into a substantially horizontal position.

5. Agricultural machine according to claim 4, ***characterized in* that** the front working units (2, 3, 17, 19) are pivoted into a substantially vertical position by means of hydraulic cylinders (12, 13, 22, 23).

6. Agricultural machine according to claim 5, ***characterized in* that** each hydraulic cylinder (12, 13, 22, 23) is attached by one end to the central support (8) and by the opposite end to a front working unit (2, 3, 17, 19).

7. Agricultural machine according to claim 2, ***characterized in* that** the front units (2, 3, 17, 19) raised into a substantially vertical position are then folded into a substantially horizontal position, in the direction of transport (B), longitudinally above the motor vehicle (1), by means of hydraulic cylinders (15, 25, 26).

8. Agricultural machine according to claim 1, ***characterized in* that** it comprises three front working units (17, 18, 19) substantially in line, and ***in* that** the two lateral front units (17, 19) are articulated on the central support (8) by means of axes (20, 21) directed in the working direction (A).

9. Agricultural machine according to claim 8, ***characterized in* that** the side front working units (17, 19) are placed in the transport position by pivoting into a substantially vertical position by means of hydraulic cylinders (22, 23), then brought above the motor vehicle (1) by a pivoting of about 90° about a transverse axis (24) by means of at least one hydraulic cylinder (25, 26).

10. Agricultural machine according to claim 8, ***characterized in* that** the central front working unit (18), in the transport position, is positioned substantially vertically, perpendicular to the two side front working units (17, 19), this movement of the said central front unit (18) between the working position and the transport position being performed by a pivoting at an angle of about 90° about a transverse axis (24).

11. Agricultural machine according to any one of the preceding claims, ***characterized in* that** the front working units (2, 3, 17, 18, 19) comprise at least one cutterbar, a device for conditioning mown products and a grouper (5) of the products into windrows.

## Patentansprüche

1. Landwirtschaftliches Gerät mit einem Triebfahrzeug (1), das mehrere Arbeitseinheiten (2, 3, 17, 18, 19) trägt, die dazu bestimmt sind, stehende pflanzliche Produkte abzumähen, wobei mindestens zwei dieser Arbeitseinheiten (2, 3, 17, 19) bei der Arbeit und in Vorschubrichtung (A) vorne am Triebfahrzeug (1) angeordnet sind und seitlich dieses überragen, wobei das landwirtschaftliche Gerät ***dadurch gekennzeichnet* ist, dass** es
- ein Triebfahrzeug (1), das sich in zwei entgegen gesetzte Richtungen bewegen kann, eine Vorschubrichtung (A) für die Arbeit und eine Transportrichtung (B),
- eine Steuerkabine (16), die sich entlang des Triebfahrzeugs (1) bewegen kann,
- mindestens eine zentrale Stütze (8), die mit der Hubvorrichtung (9) des Triebfahrzeugs (1) verbunden ist und die Fronteinheiten (2, 3, 17, 18, 19) trägt, wobei die Arbeitseinheiten (2, 3, 17, 19), die seitlich über das Fahrzeug (1) überragen, mittels der zentralen Stütze (8) in eine Transportposition verschiebbar sind, in der sie mindestens teilweise längs über dem Triebfahrzeug (1) positioniert sind,
umfasst.

2. Landwirtschaftliches Gerät nach Anspruch 1, ***dadurch gekennzeichnet,* dass** die Arbeitseinheiten (2, 3, 17, 19), die seitlich das Triebfahrzeug (1) überragen, auf der zentralen Stütze (8) mittels Achsen (10, 11, 20, 21) angelenkt sind, die im Wesentlichen in Vorschubrichtung (A) ausgerichtet sind und um die sie in im Wesentlichen vertikale Positionen verschoben werden können, wobei die zentrale Stütze (8) eine Gelenkachse (14, 24) quer zur Vorschubrichtung (A) umfasst, um die sie mit den Arbeitseinheiten (2, 3, 17, 19) verschoben werden kann, um diese zumindest teilweise längs über dem Triebfahrzeug (1) anzuordnen.

3. Landwirtschaftliches Gerät nach Anspruch 2, ***dadurch gekennzeichnet,* dass** sich in Transportposition die frontalen Arbeitseinheiten (2, 3, 17, 19), die zumindest teilweise längs über dem Triebfahrzeug (1) angeordnet sind, hinter der Steuerkabine (16) befinden.

4. Landwirtschaftliches Gerät nach Anspruch 3, ***dadurch gekennzeichnet,* dass** die Transportposition der frontalen Arbeitseinheiten (2, 3, 17, 19) von der Arbeitsposition aus erreicht wird durch ein Schwenken der Fronteinheiten (2, 3, 17, 19) in eine im Wesentlichen vertikale Position und dann durch eine Drehung um nahe 90° der gebildeten in die Transportrichtung (B), um die Fronteinheiten (2, 3, 17, 19) in eine im Wesentlichen horizontale Position zu bringen.

5. Landwirtschaftliches Gerät nach Anspruch 4, ***dadurch gekennzeichnet,* dass** die frontalen Arbeitseinheiten (2, 3, 17, 19) in eine im Wesentlichen vertikale Position mittels Hydraulikzylindern (12, 13, 22, 23) geschwenkt werden.

6. Landwirtschaftliches Gerät nach Anspruch 5, ***dadurch gekennzeichnet,* dass** jeder Hydraulikzylinder (12, 13, 22, 23) mit einem Ende an der zentralen Stütze (8) und mit dem gegenüber liegenden Ende an einer frontalen Arbeitseinheit (2, 3, 17, 19) befestigt ist.

7. Landwirtschaftliches Gerät nach Anspruch 2, ***dadurch gekennzeichnet,* dass** die Fronteinheiten (2, 3, 17, 19), die in eine im Wesentlichen vertikale Position angehoben sind, dann in eine im Wesentlichen horizontale Position in Transportrichtung (B) längs über das Triebfahrzeug (1) mittels Hydraulikzylindern (15, 25, 26) eingeklappt werden.

8. Landwirtschaftliches Gerät nach Anspruch 1, ***dadurch gekennzeichnet,* dass** sie drei im Wesentlichen ausgerichtete frontale Arbeitseinheiten (17, 18, 19) umfasst, und dass die beiden seitlichen Fronteinheiten (17, 19) auf der zentralen Stütze (8) mittels Achsen (20, 21) angelenkt sind, die in Arbeitsrichtung (A) ausgerichtet sind.

9. Landwirtschaftliches Gerät nach Anspruch 8, ***dadurch gekennzeichnet,* dass** die seitlichen frontalen Arbeitseinheiten (17, 19) in die Transportposition durch Schwenken in eine im Wesentlichen vertikale Richtung mittels Hydraulikzylindern (22, 23), und dann über das Triebfahrzeug (1) durch ein Schwenken von nahe 90° um eine Querachse (24) mittels mindestens eines Hydraulikzylinders (25, 26), gebracht werden.

10. Landwirtschaftliches Gerät nach Anspruch 8, ***dadurch gekennzeichnet,* dass** die zentrale frontale Arbeitseinheit (18) in Transportposition im Wesentlichen in der Vertikalen senkrecht auf die beiden seitlichen frontalen Arbeitseinheiten (17, 19) positioniert wird, wobei diese Verschiebung der zentralen Fronteinheit (18) zwischen der Arbeitsposition und der Transportposition durch Schwenken um einen Winkel nahe 90° um eine Querachse (24) erfolgt.

11. Landwirtschaftliches Gerät nach irgend einem der vorhergehenden Ansprüche, ***dadurch gekennzeichnet,* dass** die frontalen Arbeitseinheiten (2, 3, 17, 18, 19) mindestens einen Mähbalken, eine Konditioniervorrichtung für die abgemähten Produkte und eine Sammelvorrichtung (5) zum Sammeln der Produkte in Schwaden umfassen.
